# EUROPEAN PATENT SPECIFICATION

(11) **EP 0 713 333 B1**
(45) Date of publication and mention of the grant of the patent: **10.05.2000**
(21) Application number: 94118267.7
(22) Date of filing: 19.11.1994
(51) Int. Cl.: H04N 5/44, H04N 5/50, H04N 7/16, H04H 9/00

(54) **Television receiver with apparatus for the quick exchange of data concerning instructions and/or functions**
Fernsehempfänger mit einer Vorrichtung zum schnellen Austauschen von Daten betreffend Befehle und/oder Funktionen
Récepteur de télévision avec un dispositif pour l'échange rapide de données concernant des instructions et/ou des functions

(43) Date of publication of application: 22.05.1996
(73) Proprietor: Società Italiana per lo Sviluppo dell'Elettronica S.I.SV.EL. S.p.A., 10060 None (TO) (IT)
(72) Inventor: Graziani, Daniele, I-48010 Bagnara di Romagna (IT)

(56) References cited:
- EP-A- 0 309 326
- EP-A- 0 314 871
- EP-A- 0 317 404
- EP-A- 0 426 542
- EP-A- 0 520 289
- EP-A- 0 530 601
- EP-A- 0 542 048
- EP-A- 0 552 543
- EP-A- 0 599 366
- WO-A-92/05657
- WO-A-93/05618
- WO-A-93/07715
- FR-A- 2 652 430
- GB-A- 2 027 298
- US-A- 4 751 732
- US-A- 4 855 842
- US-A- 5 093 731
- US-A- 5 144 663
- US-A- 5 282 249
- 18TH INTERNATIONAL TELEVISION SYMPOSIUM AND TECHNICAL EXHIBITION, MONTREUX (CH), 10-15 JUNE 1993, SYMPOSIUM RECORD CABLE SESSIONS, CABLE C1, pages 743-757, XP 000379322 MONNIN G. 'SMART CARDS FOR CONDITIONAL ACCESS : A SECURITY AND MARKETING TOOL'
- IEEE TRANSACTIONS ON CONSUMER ELECTRONICS, vol. 36,no. 3, 30 August 1990 NEW YORK US, pages 744-752, XP 000162915 PEYRET P. ET AL 'SMART CARDS PROVIDE VERY HIGH SECURITY AND FLEXIBILITY IN SUBSCRIBERS MANAGEMENT'

## Description

The subject of the present invention refers to a television receiver with apparatus for the rapid exchange of instructions and/or information.

With television receiver it is herein intended a television set, a video recorder, or any other apparatus able to receive and manipulate television signals.

Television receivers are known provided with a control unit comprising a memory wherein instructions and/or relevant operative information is stored concerning the programming of channels, the setting-up of the television receiver or other; periodically the stored data is updated and this involves spending a certain amount of time on the television receiver and the intervention of personnel able to materially carry out the operation: in the case, for example, of managing a high number of television receivers, such as hotels for example, community centres, hospitals or similar, the data updating operation involves extremely high charges: therefore such operations are often hurriedly carried out, by inexperienced personnel and with unsatisfactory results.

It is known from WO-A-93/07715 a television receiver with an apparatus for the exchange of information having a device joined to the control unit of the television receiver for reading electronic cards in order to automatically perform a channel programming.

It is also known from US-A-5,144,663 a method of interactive communication between a subscriber and a decoder of a system of pay-television The decoder comprises a microprocessor, a character generator and a card reader/writer.

It is further from FR-A-2 652 430 a method and system for measuring the audience of television programmes The system comprises a plurality of television receivers, each one equipped with a card reader/writer; and a central unit also equipped with a card reader/writer; through the cards the information is exchanged between the receivers and the central unit.

The technical task of the present invention is that of overcoming the cited drawbacks, to realise therefore a television receiver provided with apparatus for the rapid exchange of instructions and/or information that allows to carry out in an extremely rapid way the updating operations of setting-up the television receiver.

Another purpose of the present invention is to make available a television that is able to exchange with the user information of any nature that can easily be updated.

Another purpose of the present invention is that of avoiding the previous tasks with a simple structure, of relatively easy and practical realisation, of safe use and effective functioning, and also of relatively contained costs.

Such purposes and advantages are reached according to the present invention by way of a television receiver having the characterising features of the annexed claim 1.

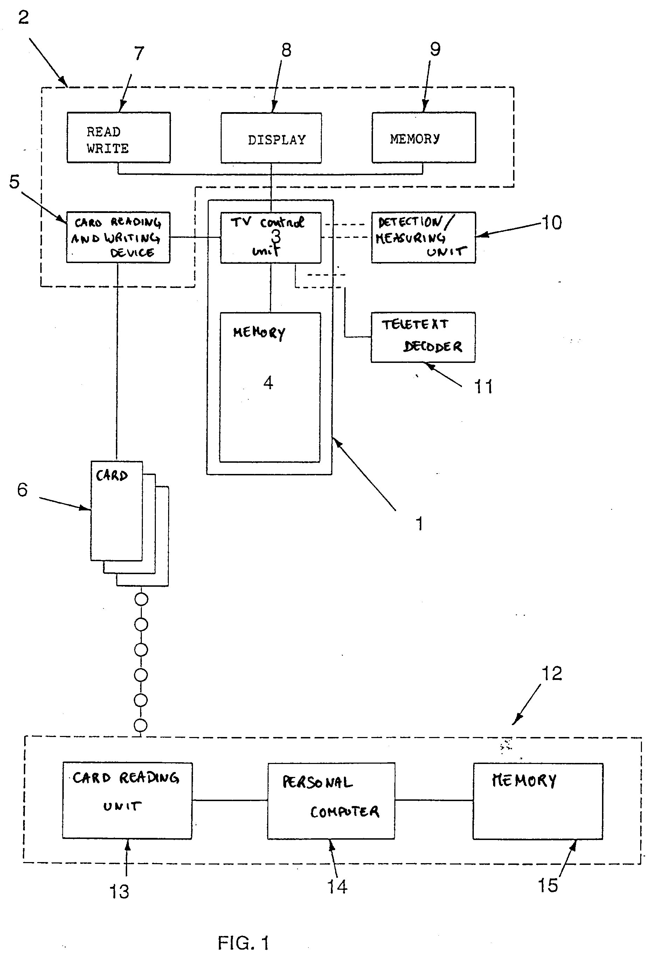

Further details will result in being more clear and evident from the detailed description of a preferred, but non exclusive, embodiment of a television receiver with apparatus for the rapid exchange of instructions and/or information according to the invention, illustrated as an example, but non limiting, in the annexed tables of drawings , wherein:
the single figure is a block diagram of a television receiver equipped with a rapid exchange apparatus of instructions according to the invention.

With particular reference to such figure with 1 the television receiver is illustrated as a whole, equipped with an apparatus 2 for the rapid exchange of instructions and/or information according to the invention.

Only the elements of the television receiver 1 that are of interest to the invention are indicated in the figure

The apparatus 2 is connected to the control unit 3 of the television receiver (control unit, usually comprising a microprocessor), in turn connected with a non volatile electronic memory, for the storing of data, that it is schematically illustrated with 4, and may be advantageously expanded, for allowing it to store a greater quantity of data.

The apparatus 2 includes, coupled to the control unit 3 of the television receiver:
- a device 5, of a known type, for the reading/writing of electronic cards 6;
- a card writing and reading control unit, indicated with the number 7;
- a control unit of the information display, indicated with the number 8; such unit 8 may eventually be provided active only in the case in which the teletext function is active;
- a control unit of the acquisition and storing of internal or external source data, indicated with the number 9.

These units 5, 7, 8 and 9, that have been shown only as blocks in the figure, are able to introduce in the memory 4, by way of the control unit 3 of the television receiver, data of the card 6 and/or to withdraw data from the memory 4 and report it on the card.

An eventual detection station or measuring of external data (temperature, humidity, or similar) can also be connected to the unit 3, shown with 10̸, and an eventual receiver and teletext decoder circuit, indicated with the number 11.

Regarding practical aspects the television receiver normally already has units 3 and 4; it may eventually already include the unit 11 as well; unit 10̸ may be inserted if desired in the television receiver 1 or in the apparatus 2 according to the invention.

In any case the control unit 3 must be duly connected with control groups 7, 8 and 9, advantageously by means of a data exchange bus (for example the known I2C bus, utilised in many television receivers).

The apparatus according to the invention allows to supply or withdraw data from the memory of the television receiver, eventually expanded, by means of said electronic cards, provided with memory means for storing data.

For simplifying the storing operations of data retrieved from the cards it is also possible to realise a data elaboration unit, shown as a whole with number 12, composed of a card reading unit, shown with number 13, arranged for connection to a personal computer, indicated with number 14, in turn equipped with a card data management program, and of a memory for the storing of data, shown with number 15; such complex 12 can naturally be used for carrying out further data elaborations.

The kinds of information that can be duly exchanged, are numerous:
- instructions for the updating of programming channels, - statistical detection of channels and viewing times,
- ambient measuring and detection carried out by the sensors, or others.

In practice with the simple introduction of the card in the read/write device 5 it is able to:
- copy with a single operation all the adjustments of one apparatus to another (tuning, programming of channels, adjustment of levels, etc.), characteristics which are more than useful for installers, dealer, hotels, community centres;
- transfer of data of the television receiver to an external apparatus (such as a personal computer equipped for reading/writing of cards and a suitable elaboration program) in a more simple and immediate way;
- file and to utilise when needed different adjustments of the apparatus (for example, a hotel can prepare a different programming of the channels depending on the nationality of the guest; or a tradesman can adjust all channels in an uniform way on all the apparatuses);
- read the adjustments and the state of the apparatus without having to move the apparatus itself, but simply transferring the card (distance diagnosis of breakdowns, etc.);
- enable the vision of some programs only by inserting the card (adult and children's channels, etc.);
- enable the vision with cards "to deduct" (pay channels, etc.);
- enable the vision only in established periods by way of the card;
- utilise the television receiver for collecting viewing data of different broadcasters, preferential viewing hours, etc. The low cost of the solution also allows for applying the viewing analysis to hotels and small communities;
- utilise the television receiver for also collecting data of external sources (comsumptions, attendance, working hours, etc.), simply providing it with suitable elements and relative connections;
- utilise the television receiver as a timing clock for controlling personnel in hotels and clinics, for surveillance, and so on.

It is to be noted how the same card may be utilised for numerous functions simultaneously, even with external devices: in a hotel, for example, a card can authorise the vision of some channels, function as a payment card for others, and can function as electronic key for the door of the room.

The television receiver may be equipped with video graphic capacity, as for example is the case of apparatuses equipped with teletext (or even only of the relative graphic display circuitry). The management program can then be realised for also utilising the information of the card. The possibility to insert information in the internal memory of the television receiver in a practical and fast way therefore allows:
- to insert informative video pages;
- to insert publicity information;
- to insert useful information or of general interest;
- to directly consult on the television receiver the information contained in the card.

The apparatus according to invention allows for controlled diffusion of information within a community, for example a clinic, hotel, and similar, in an extremely simple and economical manner, therefore also apt with reduced numbers of users.

It has been illustrated how the invention reaches the proposed aims.

The invention thus conceived is susceptible of numerous modifications and variations all falling within the scope of the inventive concept.

Furthermore all details may be replaced with others being technically equivalent.

In practice the materials used, and also the forms and sizes, may be any depending on requirements without departing from the scope of protection of the following claims.

For example in the case of use of the electronic card 6 for obtaining the viewing data of broadcasters, this can be read any evening or any morning (on the user's choice) by a suitable reader of the type such as that indicated with 13 (controlled by a microprocessor unit equipped with appropriate interfaces) and delivered by means of telephone or radio transmissions to a concentrator that in turn provides to forward the data to the central computer which elaborates the viewing statistics. Naturally, especially in the case of transmission via telephone, the reader of magnetic cards and the microprocessor unit that controls it, rather than sending data to a concentrator, could transmit it directly to the central computer. This solution is particularly advantageous with respect to those known, because it would allow for transferring viewing data from the television receiver to the telephone line without obliging the user to modify his own telephone system, for bringing the telephone line in proximity with the television receiver.

## Claims

1. Television signal receiver system, comprising a television receiver (1) including an apparatus for the exchange of information, said apparatus comprising:
- a device (5) coupled to the control unit (3) of the television receiver for reading or writing electronic cards (6) containing data, and
- a control unit (7, 9) for controlling the exchange of data with the card, by writing into or reading from a memory (4) associated with the control unit (3) of the television signal receiver (1) data respectively present in or destined to the card (6),
said system further comprising an external apparatus
characterised in that it is arranged for transferring data from the television signal receiver (1), via the card to the external apparatus (14) equipped with a card reader (13) and connected to a telephone line, and in that it is arranged for reading adjustment and state data of the television signal receiver (1) without having to move the receiver itself, by transferring the card to the card reader (13) of said external apparatus for effecting a distance diagnosis of defects or failures.

2. Television signal receiver system, according to claim 1, characterised in that it comprises a control unit of the display of information (8) on the screen of the receiver.

3. Television signal receiver system, according to claim 1 or 2, characterised in that a measuring and/or detecting station of external data is connected to the control unit (3) of the receiver (1).

4. Television signal receiver system, according to any one of the preceding claims, characterised in that it is arranged to be able to copy with a single operation all the adjustment of the receiver via the card.

5. Television signal receiver system, according to one or more of the preceding claims, that it is arranged for storing and utilising when necessary different adjustments of the receiver.

6. Apparatus for use in a television signal receiver system according to claim 1, said apparatus comprising:
- a device (5) coupled to the control unit (3) of the television receiver for reading or writing electronic cards (6) containing data, and
- a control unit (7, 9) for controlling the exchange of data with the card, by writing into or reading from a memory (4) associated with the control unit (3) of the television signal receiver (1) data respectively present in or destined to the card (6),
characterised in that it is arranged for transferring data from the television signal receiver (1) via the card to an external apparatus (14) equipped with a card reader (13) and connected to a telephone line, and in that it is arranged for reading adjustment and state data of the television signal receiver (1) without having to move the receiver itself, by transferring the card to the card reader (3) of said external apparatus for effecting a distance diagnosis of defects or failures.

## Patentansprüche

1. Fernsehsignal-Empfängersystem mit einem Fernsehempfänger, der eine Vorrichtung für den Informationsaustausch einschließt, wobei die Vorrichtung umfasst:
eine an die Steuereinheit (3) des Fernsehempfängers gekoppelte Einrichtung zum Lesen/Beschreiben Daten enthaltender, elektronischer Karten (6) und
eine Steuereinheit (7, 9) zur Steuerung des Austausches von Daten mit der Karte durch Schreiben in oder Lesen aus einem Speicher (4), der der Steuereinheit (3) des Fernsehsignalempfängers (1) zugeordnet (verbunden) ist, wobei die Daten jeweils auf der Karte (8) vorhanden oder für die Karte bestimmt sind,
das System umfasst ferner eine externe Vorrichtung, dadurch gekennzeichnet, dass es geeignet ist, Daten von dem Fernsehsignalempfänger (1), über die Karte zu der externen Vorrichtung (14) zu übertragen, die mit einer Kartenleseeinrichtung ausgestattet ist (13) und an eine Telefonleitung angeschlossen ist, und dadurch gekennzeichnet, dass es geeignet ist, Einstellungs- und Zustandsdaten des Fernsehsignalempfängers (1) zu lesen, ohne den Empfänger selbst bewegen zu müssen, indem die Karte zu der Kartenleseeinrichtung (13) der externen Vorrichtung übertragen wird, um eine Ferndiagnose von Defekten oder Fehlern zu bewirken.

2. Fernsehsignalempfängersystem gemäß Anspruch 1, gekennzeichnet durch eine Steuereinheit der Anzeige von Informationen (8) auf dem Bildschirm des Empfängers.

3. Fernsehsignalempfängersystem gemäß Anspruch 1 oder 2, dadurch gekennzeichnet, dass eine Mess- und/oder Erfassungsstation für externe Daten an die Steuereinheit (3) des Empfängers (1) angeschlossen ist.

4. Fernsehsignalempfängersystem gemäß einem der vorstehenden Ansprüche, dadurch gekennzeichnet, dass es geeignet ist, mit einer einzelnen Operation all die Einstellungen des Empfängers kopieren zu können.

5. Fernsehsignalempfängersystem gemäß einem oder mehreren der vorstehenden Ansprüche, dadurch gekennzeichnet, dass es geeignet ist, unterschiedliche Einstellungen des Empfängers, wenn notwendig, zu speichern und zu verwenden.

6. Vorrichtung zur Verwendung in einem Fernsehsignalempfängerssystem nach Anspruch 1, wobei die Vorrichtung enthält:
- eine an eine Steuereinheit (3) des Fernsehempfängers gekoppelte Einrichtung zum Lesen/Beschreiben datenenthaltener, elektronischer Karten und
- eine Steuereinheit (7, 9) zum Steuern des Austausches von Daten mit der Karte durch Schreiben in oder Lesen aus einen/einem Speicher (4), der mit der Steuereinheit (3) des Fernsehsignalempfängers (1) zugeordnet (verbunden) ist, wobei die Daten jeweils auf der Karte (8) vorhanden oder für die Karte bestimmt sind,
dadurch gekennzeichnet, dass es geeignet ist, Daten von dem Fernsehsignalempfänger (1) über die Karte zu der externen Vorrichtung (14) zu übertragen, die mit einer Kartenleseeinrichtung ausgestattet ist (13) und an eine Telefonleitung angeschlossen ist, dass sie geeignet ist, Einstellungs- und Zustandsdaten des Fernsehsignalempfängers (1) zu Lesen, ohne dass der Empfänger selbst bewegt werden muss, indem die Karte zu der Kartenleseeinrichtung (13) der externen Vorrichtung übertragen wird, um eine Ferndiagnose von Defekten oder Fehlern zu bewirken.

## Revendications

1. Système de récepteur de signaux de télévision comprenant un récepteur de télévision qui comporte un appareil pour l'échange d'informations, ledit appareil comprenant :
- un dispositif (5) relié à l'unité de commande (3) du poste de télévision pour la lecture ou l'écriture de cartes électroniques (6) contenant des données ; et
- une unité de commande (7, 9) pour commander l'échange de données avec la carte en écrivant dans ou en lisant à partir d'une mémoire (4) associée à l'unité de commande (3) du récepteur de signaux de télévision (1) des données respectivement présentes dans ou destinées à, la carte (6), ledit système comprenant en outre un appareil externe.
caractérisé en ce qu'il est agencé pour transférer des données à partir du récepteur de signaux de télévision (1), via la carte, vers l'appareil externe (14) équipé d'un lecteur de cartes (13) et relié à une ligne téléphonique, et en ce qu'il est agencé pour lire les données de réglage et d'état du récepteur de signaux de télévision (1) sans avoir à déplacer le récepteur lui-même en transférant la carte au lecteur de cartes (13) dudit appareil externe, pour effectuer un diagnostic à distance des défauts ou des défaillances.

2. Système de récepteur de signaux de télévision selon la revendication 1, caractérisé en ce qu'il comprend une unité de contrôle de l'affichage des informations (8) sur l'écran du récepteur.

3. Système de récepteur de signaux de télévision selon la revendication 1 ou 2, caractérisé en ce qu'une station de mesure et/ou de détection de données externes est reliée à l'unité de commande (3) du récepteur (1).

4. Système de récepteur de signaux de télévision selon l'une quelconque des revendications précédentes, caractérisé en ce qu'il est agencé pour être capable de copier, au moyen d'une opération unique, tous les réglages du récepteur.

5. Système de récepteur de signaux de télévision selon l'une ou plusieurs des revendications précédentes. caractérisé en ce qu'il est agencé pour stocker et pour utiliser, quand cela est nécessaire, les différents réglages du récepteur.

6. Appareil destiné à être utilisé dans un système de récepteur de signaux de télévision selon la revendication 1, ledit appareil comprenant :
- un dispositif (5) relié à l'unité de commande (3) du récepteur de télévision pour lire ou écrire des cartes électroniques (6) contenant des données ;
- une unité de commande (7, 9) pour commander l'échange de données avec la carte, en écrivant dans ou en lisant à partir d'une mémoire (4) associée à l'unité de commande (3) du récepteur de signaux de télévision (1) des données respectivement présentes dans, ou destinées à, la carte (6)
caractérisé en ce qu'il est agencé pour transférer des données à partir du récepteur de signaux de télévision (1) via la carte, vers un appareil externe (14) équipé d'un lecteur de carte (13) et relié à une ligne téléphonique, et en ce qu'il est agencé pour lire les données de réglage et d'état du récepteur de signaux de télévision (1) sans avoir à déplacer le récepteur lui-même, en transférant la carte au lecteur de carte (3) dudit appareil externe, pour effectuer un diagnostic à distance des défauts ou des défaillances.
